# EUROPÄISCHE PATENTANMELDUNG

(11) **EP 2 722 156 A1**
(43) Veröffentlichungstag der Anmeldung: **23.04.2014**
(21) Anmeldenummer: 12007272.3
(22) Anmeldetag: 22.10.2012
(51) Int. Cl.: B29C 63/00, B29C 63/02

(54) **Vorrichtung und Verfahren zur Ummantelung von Profilmaterial mit Trägermaterial**

(71) Anmelder: Fabryki Mebli "Forte" SA, 07-300 Ostrow Mazowiecka (PL)
(72) Erfinder: Dahlem, Klaus Dieter, 57520 Grosbliederstroff (FR)
(74) Vertreter: Hoefer & Partner

(57) **Zusammenfassung**

Vorrichtung (1) zur Ummantelung von Profilmaterial (P) mit Trägermaterial (T), umfassend eine ortsfeste Klebstoffstation (2) zum Auftragen von Klebstoff auf das Trägermaterial (T), eine erste Profilandrückstation (3) zum Andrücken des Trägermaterials (T) auf das Profilmaterial (P), wobei die erste Profilandrückstation (3) mit der Klebstoffstation (2) koppelbar und von dieser entkoppelbar ist, eine zweite Profilandrückstation (5) zum Andrücken des Trägermaterials (T) auf das Profilmaterial (P), wobei die zweite Profilandrückstation (5) mit der Klebstoffstation (2) koppelbar und von dieser entkoppelbar ist, und eine Führungseinrichtung (4) zum Verschieben der beiden Profilandrückstationen (3, 5), so dass die Profilandrückstationen (3, 5) gegeneinander auswechselbar sind.

## Beschreibung

Die Erfindung betrifft eine Vorrichtung zur Ummantelung von Profilmaterial mit Trägermaterial sowie ein entsprechendes Verfahren.

Der Stand der Technik kennt verschiedene Vorrichtungen zum Ummanteln eines Profilmaterials, beispielsweise aus Holz oder Verbundmaterial, mit einem Trägermaterial. Das Trägermaterial ist beispielsweise eine Kunststoff- oder Metallfolie, die auf das Profilmaterial aufgeklebt wird. Die Vorrichtungen gemäß dem Stand der Technik bestehen aus einem zusammenhängenden Maschinenkörper, dem sogenannten Maschinenbett. Am Maschineneingang befindet sich ein Einlauftisch, auf den die Profile eingezogen werden. Im Anschluss an den Einlauftisch wird das Profil mit dem beleimten Trägermaterial ummantelt. Entsprechend der geometrischen Ausgestaltung des Profils, bedarf es sehr exakt eingestellter Vorrichtungen, beispielsweise Druckrollen zum Andrücken des Trägermaterials auf das Profil. Um eine ausreichend hohe Qualität bei der Verbindung des Trägermaterials mit dem Profil zu gewährleisten, bedarf es entsprechend langer Druckzonen und sehr vieler Druckrollen. Die Einstellung der Druckrollen ist äußerst zeitaufwändig und kann je nach Komplexität des Profils mehrere Stunden in Anspruch nehmen. Die herkömmlichen Vorrichtungen sind aufgrund des zusammenhängenden Maschinenbettes sehr starr und unflexibel.

Es ist Aufgabe vorliegender Erfindung, eine Vorrichtung und ein Verfahren zur Ummantelung von Profilmaterial mit Trägermaterial anzugeben, die bei kostengünstiger Herstellung und Durchführung eine qualitativ hochwertige und schnelle Ummantelung des Profilmaterials mit dem Trägermaterial ermöglichen.

Die Lösung der Aufgabe erfolgt durch die beiden unabhängigen Ansprüche. Die jeweiligen Unteransprüche haben bevorzugte Weiterbildungen der Erfindung zum Gegenstand.

Erfindungsgemäß ist vorgesehen, die Vorrichtung in zwei Abschnitte zu unterteilen. Im ersten Abschnitt erfolgt das Auftragen des Klebstoffes auf das Trägermaterial. Im zweiten Abschnitt erfolgt die Verbindung zwischen Profilmaterial und Trägermaterial, also das Auflegen des Trägermaterials auf das Profilmaterial und das Andrücken des Trägermaterials entsprechend der Geometrie des Profilmaterials. Die Klebstoffstation kann in der Regel für verschiedenste Profile verwendet werden und muss nicht umgerüstet werden. Die Profilandrückstation allerdings muss bei jedem Wechsel des Profilmaterials entsprechend verändert werden. Verändert sich die Geometrie des Profilmaterials, so müssen auch die Druckrollen an der Profilandrückstation entsprechend neu eingestellt werden, um eine hohe Qualität bei der Ummantelung zu erreichen. Erfindungsgemäß sind deshalb zumindest zwei Profilandrückstationen vorgesehen, die mit der Klebstoffstation koppelbar sind. Im laufenden Betrieb der Vorrichtung ist eine der Profilandrückstationen stets im Betrieb und dabei mit der Klebstoffstation gekoppelt. Die zweite Profilandrückstation befindet sich auf einer sogenannten Rüstposition und kann für das nächste zu bearbeitende Profilmaterial eingestellt werden. Zum schnellen Wechsel zwischen den beiden Profilandrückstationen ist eine Führungseinrichtung vorgesehen. Mittels dieser Führungseinrichtung können die Profilandrückstationen verschoben werden, so dass eine schnelle Auswechslung möglich ist.

Die Klebstoffstation ist insbesondere als Beleimstation ausgebildet. Dementsprechend wird als Klebstoff vorzugsweise ein Leim verwendet. Das Trägermaterial ist vorzugsweise eine Materialbahn bzw. Folie, beispielsweise aus Kunststoff, Verbundmaterial, Holzfurnier, Leder oder Metall. Das Profilmaterial besteht vorzugsweise aus Holz, Verbundmaterial, Kunststoff oder Metall.

Die Führungseinrichtung ist vorzugsweise als Schienenführung, insbesondere als Linearflachführung, ausgebildet. Die Schienenführung erstreckt sich senkrecht zur Bewegungsrichtung des Trägermaterials und des Profilmaterials. Dementsprechend sind die beiden Profilandrückstationen senkrecht zur Bewegungsrichtung des Profilmaterials und des Trägermaterials verschiebbar.

Zur schnellen Auswechslung der Profilandrückstationen sind Schnellverschlüsse zum Koppeln der Profilandrückstationen mit der Klebstoffstation vorgesehen.

Die Erfindung umfasst des Weiteren ein Verfahren zur Ummantelung von Profilmaterial mit Trägermaterial. In diesem Verfahren wird stets eine der Profilandrückstationen umgerüstet, während die andere Profilandrückstation in Betrieb ist. Die im Rahmen der erfindungsgemäßen Vorrichtung vorgestellten Unteransprüche und vorteilhaften Ausgestaltungen finden entsprechend vorteilhafte Anwendung auf das erfindungsgemäße Verfahren.

Im Folgenden wird die Erfindung anhand der begleitenden Zeichnungen im Detail beschrieben. Dabei zeigen:
- Fig. 1: eine schematische Seitenansicht einer erfindungsgemäßen Vorrichtung gemäß einem Ausführungsbeispiel, und
- Fig. 2: eine schematische Draufsicht auf die erfindungsgemäße Vorrichtung gemäß dem Ausführungsbeispiel.

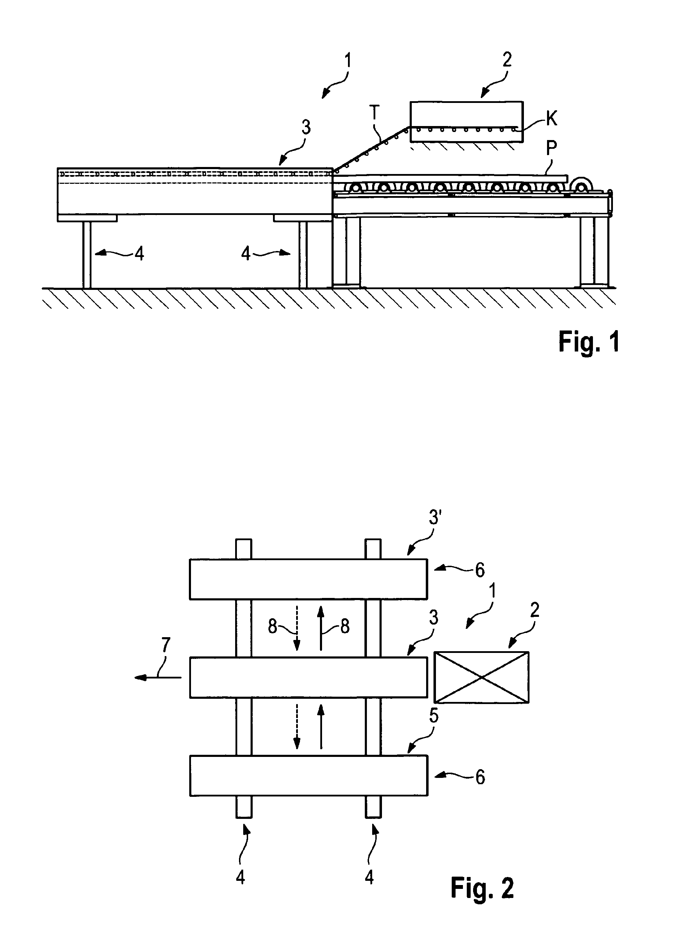

In schematisch vereinfachter Darstellung, zeigen die Fig. 1 und 2 eine Vorrichtung 1 zur Ummantelung von Profilmaterial P mit Trägermaterial T.

Die Vorrichtung 1 umfasst eine Klebstoffstation 2. An dieser Klebstoffstation 2 wird ein Klebstoff K, insbesondere ein Leim, auf das Trägermaterial T aufgebracht. Das Trägermaterial T ist eine Materialbahn, beispielsweise eine Folie.

Des Weiteren umfasst die Vorrichtung 1 eine erste Profilandrückstation 3 und eine zweite Profilandrückstation 5. Die beiden Profilandrückstationen 3, 5 sind auf einer Führungseinrichtung 4, ausgebildet als Schienenführung, gelagert.

Das Profilmaterial P und das Trägermaterial T werden entlang einer ersten Richtung 7 durch die Vorrichtung 1 bewegt. Die beiden Profilandrückstationen 3, 5 sind in einer zur ersten Richtung 7 senkrechten zweiten Richtung 8 entlang der Führungseinrichtung 4 verschiebbar.

Fig. 2 zeigt die erste Profilandrückstation 3, gekoppelt mit der Klebstoffstation 2. In diesem Zustand, wird an der ersten Profilandrückstation 3 ein entsprechendes Profilmaterial P mit dem Trägermaterial T ummantelt. Gleichzeitig befindet sich die zweite Profilandrückstation 5 auf einer Rüstposition 6. Auf dieser Rüstposition 6 wird die zweite Profilandrückstation 5 für ein anderes Profilmaterial P vorbereitet. Zum Wechsel der Profilandrückstationen 3, 5 wird zunächst die erste Profilandrückstation 3 auf eine Rüstposition 6 verschoben. Dieser Zustand ist in Fig. 2 mit dem Bezugszeichen 3' gekennzeichnet. Daraufhin wird die zweite Profilandrückstation 5 mittels der Führungsvorrichtung 4 zur Klebstoffstation 2 hin verschoben und mit dieser gekoppelt.

Die erfindungsgemäße Vorrichtung sowie das erfindungsgemäße Verfahren ermöglichen eine sehr schnelle und effektive Ummantelung von Profilmaterial mit Trägermaterial.

### Bezugszeichenliste

- 1: Vorrichtung
- 2: Klebstoffstation
- 3: Erste Profilandrückstation
- 4: Führungseinrichtung
- 5: Zweite Profilandrückstation
- 6: Rüstpositionen
- 7: Erste Richtung
- 8: Zweite Richtung
- T: Trägermaterial
- P: Profilmaterial
- K: Klebstoff

## Patentansprüche

1. Vorrichtung (1) zur Ummantelung von Profilmaterial (P) mit Trägermaterial (T), umfassend
- eine ortsfeste Klebstoffstation (2) zum Auftragen von Klebstoff auf das Trägermaterial (T),
- eine erste Profilandrückstation (3) zum Andrücken des Trägermaterials (T) auf das Profilmaterial (P), wobei die erste Profilandrückstation (3) mit der Klebstoffstation (2) koppelbar und von dieser entkoppelbar ist,
- eine zweite Profilandrückstation (5) zum Andrücken des Trägermaterials (T) auf das Profilmaterial (P), wobei die zweite Profilandrückstation (5) mit der Klebstoffstation (2) koppelbar und von dieser entkoppelbar ist, und
- eine Führungseinrichtung (4) zum Verschieben der beiden Profilandrückstationen (3, 5), so dass die Profilandrückstationen (3, 5) gegeneinander auswechselbar sind.

2. Vorrichtung nach Anspruch 1, **dadurch gekennzeichnet, dass** die erste Profilandrückstation (3) baugleich mit der zweiten Profilandrückstation (5) ist.

3. Vorrichtung nach einem der vorhergehenden Ansprüche, **dadurch gekennzeichnet, dass** das Profilmaterial (P) und das Trägermaterial (T) in einer ersten Richtung (7) durch die Vorrichtung (1) bewegbar sind, wobei die beiden Profilandrückstationen (3, 5) mittels der Führungseinrichtung (4) in einer zur ersten Richtung (7) senkrechten zweiten Richtung (8) verschiebbar sind.

4. Vorrichtung nach einem der vorhergehenden Ansprüche, **dadurch gekennzeichnet, dass** die Führungseinrichtung (4) als Schienenführung, insbesondere als Linearflachführung, ausgebildet ist.

5. Vorrichtung nach einem der vorhergehenden Ansprüche, **dadurch gekennzeichnet, dass** die Profilandrückstationen (3, 5) mehrere verstellbare Druckrollen zum Andrücken des Trägermaterials (T) auf das Profilmaterial (P) umfassen.

6. Vorrichtung nach einem der vorhergehenden Ansprüche, **dadurch gekennzeichnet, dass** die Profilandrückstationen (3, 5) Transportvorrichtungen zum Bewegen des Profilmaterials (P) umfassen.

7. Vorrichtung nach einem der vorhergehenden Ansprüche, **dadurch gekennzeichnet, dass** die Profilandrückstationen (3, 5) mittels Schnellverschlüssen mit der Klebstoffstation (2) koppelbar und von dieser entkoppelbar sind.

8. Verfahren zur Ummantelung von Profilmaterial (P) mit Trägermaterial (T), umfassend die folgenden Schritte in gegebener Reihenfolge:
- Aufbringen eines Klebstoffes (K) auf das Trägermaterial (T) in einer Klebstoffstation (2),
- Andrücken des Trägermaterials (5) auf ein erstes Profilmaterial (P) in einer ersten Profilandrückstation (3),
- Vorbereiten einer zweiten Profilandrückstation (5), während die Klebstoffstation (2) und/oder die erste Profilandrückstation (3) in Betrieb ist,
- Entkoppeln der ersten Profilandrückstation (3) von der Klebstoffstation (2) und Verfahren der ersten Profilandrückstation (3) in eine Rüstposition (6),
- Verfahren der vorbereiteten zweiten Profilandrückstation (5) zu der Klebstoffstation (2) und Koppeln der zweiten Profilandrückstation (5) mit der Klebstoffstation (2),
- Aufbringen eines Klebstoffes (K) auf das Trägermaterial (T) in der Klebstoffstation (2), und
- Andrücken des Trägermaterials (T) auf ein zweites Profilmaterial (P) in der zweiten Profilandrückstation (5).

9. Verfahren nach Anspruch 8, **dadurch gekennzeichnet, dass** als Trägermaterial (T) eine Materialbahn aus Kunststoff oder Verbundmaterial oder Metall oder Holzfurnier verwendet wird.
